# EUROPEAN PATENT SPECIFICATION

(11) **EP 1 439 322 B1**
(45) Date of publication and mention of the grant of the patent: **24.05.2006**
(21) Application number: 03028053.1
(22) Date of filing: 08.12.2003
(51) Int. Cl.: F16G 1/28

(54) **Toothed transmission belt provided with a metal core, transmission device comprising this belt and method for manufacture of the belt**
Zahntreibriemen mit metallischem Kern, damit versehenes Getriebe und Herstellungsverfahren des Riemens
Courroie de transmission crantée à âme métallique, transmission la comprenant et procédé de fabrication de la courroie

(30) Priority: 14.01.2003 IT TO20030010
(43) Date of publication of application: 21.07.2004
(73) Proprietor: Pedri, Roberta, 15100 Alessandria (IT)
(72) Inventor: Zona, Mauro, 10134 Torino (IT)
(74) Representative: Notaro, Giancarlo

(56) References cited:
- EP-A- 1 157 813
- FR-A- 2 589 209
- US-A- 3 878 734
- US-A- 4 846 771

## Description

The present invention relates to the field of toothed transmission belts, of the type comprising a metal core coated with elastomer material, wherein said metal core comprises at least two mutually parallel and spaced apart metal elements, arranged in the longitudinal direction of the belt, and a plurality of metal cross-members, distributed according to a constant pitch in the longitudinal direction of the belt, which rigidly connect the two metal elements to each other, each metal cross-member constituting the core of a respective tooth of the toothed belt.

A toothed transmission belt according to the preamble of claim 1 is known from US 3 878 734.

The object of the invention is to provide a toothed transmission belt of the type indicated above which has a precise and reliable operation while being at the same time simple and relatively inexpensive to manufacture.

In view of achieving this and other objects, the invention provides a toothed transmission belt, as set forth in claim 1. Thanks to the arrangement of the metal core described above, the transmission belt according to the invention is characterised by high dimensional stability and consequent precision of operation over time. Moreover, the structure is such as to allow its fabrication with extremely simple operations and at a relatively low cost.

According to an additional preferred characteristic, the cross members of the metal core of the transmission belt, and consequently also the teeth of the transmission belt, have a trapeze-shaped cross section.

In an embodiment, the cross-members of the metal core, and consequently also the teeth of the toothed belt, have a trapeze shaped section also in a plane that is orthogonal to the longitudinal direction of the belt, with the ends of each cross member and of each tooth defining mutually converging inclined planes. In the case of this embodiment, therefore, each tooth assumes a pyramidal shape with its base elongated in the transverse direction relative to the longitudinal direction of the belt. Naturally, if the toothed belt is provided with teeth of this kind, it will be destined to co-operate with gear wheels having seats for the engagement of the teeth of the belt in the form of cavities having a shape complementary to the shape of each tooth of the belt. A precise engagement will thus be achieved not only with reference to the position of the belt relative to the gear wheel in the tangential direction of the wheel, but also relative to a direction transverse to the longitudinal direction of the belt.

In a first embodiment, the cross members of the metal core are constituted by metal bars with solid or hollow cross-section, welded to the two longitudinal metal strips of the core. In a second embodiment, each cross-member is constituted by a hollow section bar obtained by a bending operation starting from a metal metal sheet. In this solution, the metal sheet of each cross member has a pair of slots traversed respectively by the two longitudinal strips of the metal core.

Further features and advantages shall become more readily apparent from the description that follows with reference to the accompanying drawings, provided purely by way of non limiting example, in which:
- Figure 1 is a partially sectioned perspective view of a first embodiment of a toothed transmission belt according to the invention,
- Figure 2 is a lateral view of the belt of Figure 1,
- Figure 3 is an enlarged scale, sectioned view of the detail indicated by the arrow III in Figure 2,
- Figure 4 is a partial perspective view of a gear wheel meshing with the transmission belt of the invention, and
- Figure 5 is a partial, sectioned perspective view of a second embodiment of the transmission belt according to the invention.

In the drawings, the reference number 1 generally designates a toothed transmission belt comprising a metal core 2 coated with a layer of rubber 3.

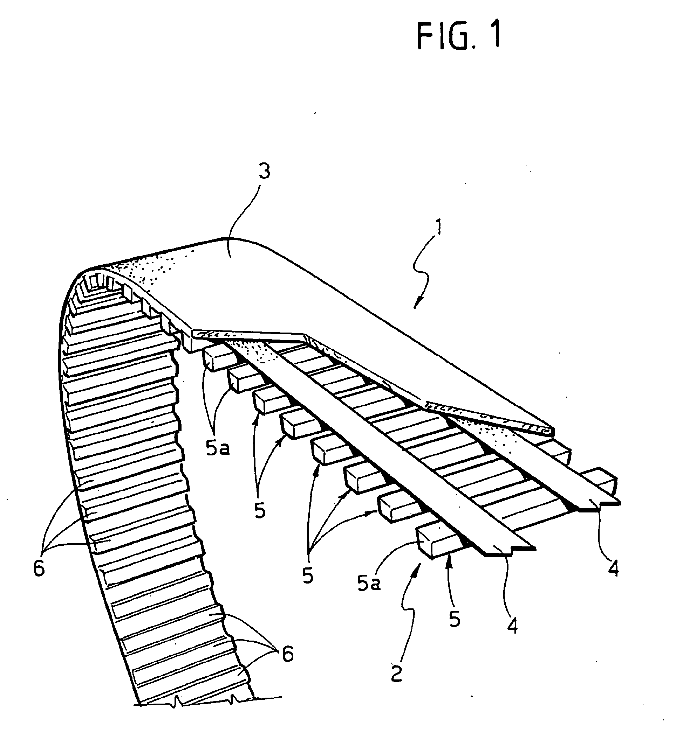

In the case of the first embodiment of the invention shown in Figures 1-4, the metal core comprises two mutually parallel and spaced apart metal strips, substantially coplanar to each other and extending in the longitudinal direction of the belt. The two metal strips 4 are mutually connected by a plurality of metal cross members 5 which extend transversely relative to the longitudinal direction of the belt and which are connected by any connecting means (in the illustrated example, by means of welding) to the two metal strips 4. The metal cross members 5 are distributed according to a constant pitch in the longitudinal direction of the belt and each of them constitutes the core of a respective tooth 6 of the toothed transmission belt.

The cross members 5 therefore constitute the resistant metal structure which assures the adequate characteristics of strength of the teeth of the belt, with high dimensional stability over time, which makes the operation of the transmission belt according to the invention extremely reliable.

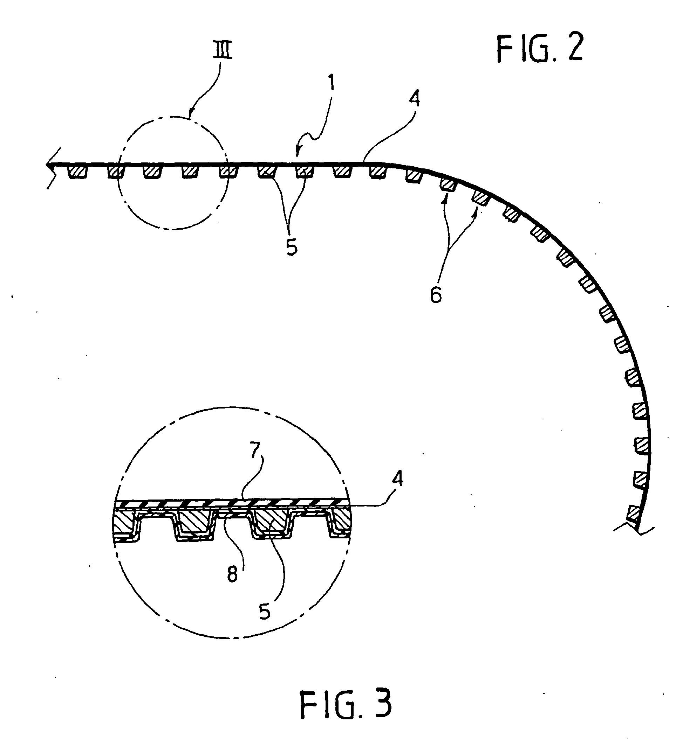

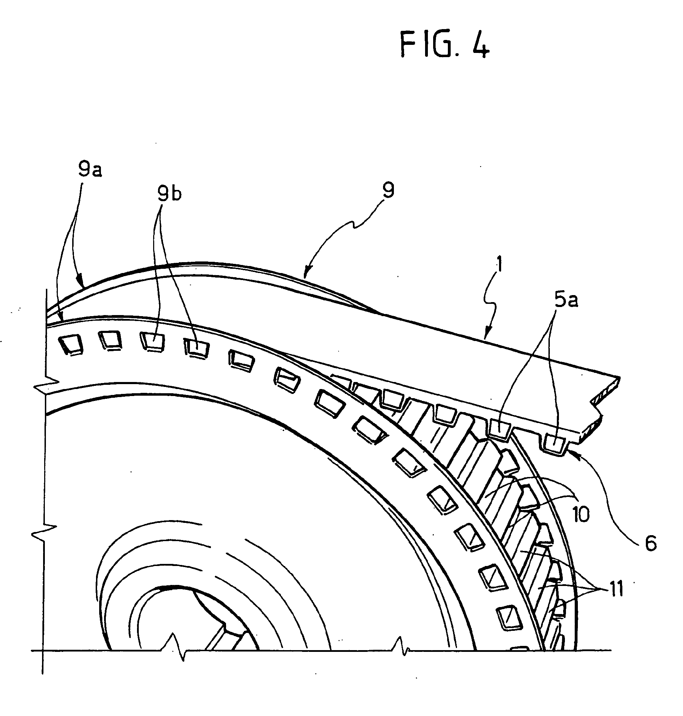

The two metal strips 4 serve the sole function of connecting the metal cross members 5 to each other and are sufficiently flexible to allow the correct operation of the belt in the areas where it has to assume a curvature to be engaged over a respective gear wheel (see Figure 4). As indicated above, the core 2 is provided with a rubber coating that covers all metal surfaces, with the exception of the end surfaces 5a (see Figure 1) of the metal cross-members 5. Moreover, in correspondence with the face of the transmission belt bearing the teeth 6, over the rubber coating is applied an additional coating of adhesion-proof plastic material (for example, nylon) 8 (Figure 3).

Figure 4 shows a gear wheel 9 engaged with the transmission belt 1 according to the invention. In the illustrated example, each tooth 6 has a trapeze shaped cross-section, whereto corresponds a complementarily shaped cavity 10 constituted by a recess between two adjacent teeth 11. The wheel 9 also has two end flanges 9a which laterally guide the transmission belt 1. If desired, each tooth 6 can also have a trapeze shaped section in a plane that is perpendicular to the longitudinal direction of the belt. In this case, the two end surfaces 5a of each metal cross-member are inclined and converging planar surfaces, in such a way that the entire shape of each tooth is a pyramidal shape, elongated in the transverse direction of the belt. In this case, the flanges 9a can also be arranged with a corresponding inclination so that they diverge from each other in a radial direction outwardly. Additionally, or alternatively to the aforesaid arrangement, the flanges 8a can be provided with a circumferential series of windows 9b in correspondence with the recesses 10 between the adjacent teeth 11 of the wheel. Said windows come to be in correspondence with the end surfaces 5a of the metal cross-members and avoid any contact or rubbing with said surfaces. If the windows 9b are provided, the end surfaces 5a of the cross members or the metal core need not be coated with rubber, as done in the case of the embodiment shown in Figure 4.

In the fabrication of the transmission belt shown in Figures 1-4, the metal core 2 is initially arranged. This can be accomplished by means of a continuous process, in an extremely efficient and rapid manner. The connection between cross-members 5 and metal strips 4 can be obtained for example by means of welding, making the two metal strips 4 advance continuously starting from feeding reels and welding over them in succession the cross members 5 coming from a supplier device, whereupon the subsequent rubber coating can also be obtained continuously, during the longitudinal advance of the metal core thus obtained. The same also holds true for the adhesion-proof coating on the toothed surface of the belt. Any desire length of belt can then be obtained by cutting the continuous belt thus produced and joining the ends of the cut belt portion by any known technique.

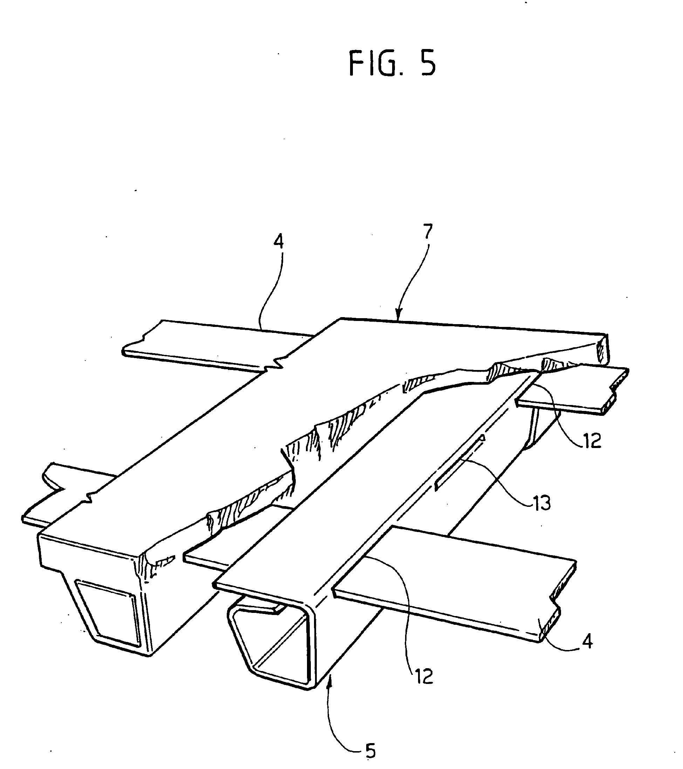

Figure 5 shows an alternative embodiment, in which the cross-members 5, instead of being constituted by solid metal bars, are obtained by a bending operation starting from a metal sheet, to assume the shape of hollow section bars. The starting metal sheet is bent four times, in correspondence with the four corners of the cross-member 5, with the two end edges of the bent metal sheet superposed on each other, as illustrated in Figure 5. The metal sheet also has two slots 12, and if desired also a third central slot 13, which are respectively traversed by the two metal strips 4 and possibly by an additional central metal strip (not shown herein). Once said metal core is arranged, the rubber coating 7 is applied as usual.

In operation, the transmission belt according to either the first embodiment of the invention described above or the embodiment shown in Figure 5, or any further embodiment implementing the basic concepts of the invention, is reliable and precise in operation and it is also able to be applied to transmissions that imply the transfer of high transmission power, assuring the necessary characteristics of strength and a high dimensional stability and a prolonged duration.

Naturally, without altering the principle of the invention, the construction details and the embodiments may be varied widely from what is described and illustrated herein purely by way of example, without thereby departing from the scope of the present invention.

## Claims

1. A toothed transmission belt, comprising a metal core (2) covered by elastomer material, wherein said metal core (2) comprises at least two mutually parallel and spaced apart metal elements (4), arranged in the longitudinal direction of the belt, and a plurality of metal cross-members, distributed according to a constant pitch in the longitudinal direction of the belt, which rigidly connect the two metal elements (4) to each other, each metal cross-member constituting the core of a respective tooth (6) of the toothed belt (1), each of said metal cross-members (5) has a cross-section whose shape defines the shape of the cross-section of the respective tooth (6), said elastomer material constituting a coating applied on the outer surface of said metal cross-members (5), **characterized in that** said metal elements are strips substantially coplanar to each other.

2. A toothed transmission belt as claimed in claim 1, **characterised in that** each cross-member (5) of the aforesaid metal core (2), and consequently each tooth (6) of the toothed transmission belt (1) has a trapeze-shaped cross section.

3. A toothed transmission belt as claimed in claim 2, **characterised in that** each cross member (5) of the metal core (2) is constituted by a solid section metal bar.

4. A toothed transmission belt as claimed in claim 1, **characterised in that** each cross member (5) is constituted by a hollow section bar obtained by a bending operation, starting from a metal sheet.

5. A toothed transmission belt as claimed in claim 4, **characterised in that** the metal sheet constituting each cross member (5) has slots (12) traversed by the aforesaid metal strips (4).

6. A toothed transmission belt as claimed in claim 1, **characterised in that** the cross members (4) are welded to the two metal strips (4).

7. A toothed transmission belt as claimed in claim 2, **characterised in that** each cross member (5) of the metal core (2) and consequently each tooth (6) of the toothed transmission belt has a trapeze-shaped cross-section also in a plane that is orthogonal to the longitudinal direction of the belt, with the end surface (5a) of each tooth positioned in mutually converging inclined planes.

8. A toothed transmission belt as claimed in claim 1, **characterised in that** the toothed surface of the belt has a layer of adhesion-proof coating (8) over the rubber coating.

9. A toothed transmission belt as claimed in any of the previous claims, **characterised in that** said belt is for meshing with a gear wheel (9) having a plurality of peripheral teeth (11) alternating with cavities (10) and two end flanges (9a) which constitute the ends of the cavities (10).

10. A toothed transmission belt as claimed in claim 9, **characterised in that** said end flanges (9a) of the gear wheel (9) have a circumferential distribution of windows (9b) corresponding to the ends of the cavities (10) between the teeth (11) of the gear wheel, to prevent a contact between the inner surfaces of said flanges (9a) and the end surfaces of the teeth (6) of the toothed transmission belt (1).

11. A method for manufacturing a toothed belt according to claim 1, **characterised in that** the two parallel and spaced apart metal strips (4) are caused to advance continuously by unrolling them from two feeding reels, said metal cross-members (5) are connected in sequence to the metal strips (4) while the strips are proceeding forward, by feeding the cross-members from a cross-member supplier, and the metal core obtained thereby is coated with a layer of elastomer material while said core is advancing.

## Patentansprüche

1. Zahntreibriemen aufweisend einen metallischen Kern (2) überzogen mit Elastomermaterial, wobei der metallische Kern (2) wenigstens zwei zueinander parallel und voneinander beabstandete Metallelemente (4) aufweist, die in longitudinaler Richtung des Riemens angeordnet sind, und eine Vielzahl von metallischen Querbauteilen, verteilt gemäß einem konstanten Abstand in der longitudinalen Richtung des Riemens, welche starr die zwei Metallelemente (4) miteinander verbinden, wobei jedes metallische Querbauteil den Kern eines jeweiligen Zahns (6) des Zahnriemens (1) bildet, jedes der metallischen Querbauteile (5) einen Querschnitt hat, dessen Gestalt die Gestalt des Querschnitts des jeweiligen Zahns (6) vorgibt, wobei das elastomere Material eine Beschichtung vorgibt, die auf die äußere Oberfläche der metallischen Querbauteile (5) aufgebracht ist, **dadurch gekennzeichnet, dass** die metallischen Elemente im Wesentlichen koplanare Streifen sind.

2. Zahntreibriemen nach Anspruch 1, **dadurch gekennzeichnet, dass** jedes Querbauteil (5) des vorhergehenden Metallkerns (2) und folglich jeder Zahn (6) des Zahntreibriemens (1) einen trapezförmigen Querschnitt hat.

3. Zahntreibriemen nach Anspruch 2, **dadurch gekennzeichnet, dass** jedes Querbauteil (5) des metallischen Kerns (2) durch den Stangenabschnitt einer Metallstange gebildet wird.

4. Zahntreibriemen nach Anspruch 1, **dadurch gekennzeichnet, dass** jedes Querbauteil (5) durch einen hohlen Stangenabschnitt gebildet wird, der durch einen Biegeablauf beginnend von einem Metallblech gewonnen wird.

5. Zahntreibriemen nach Anspruch 4, **dadurch gekennzeichnet, dass** das Metallblech, welches jedes Querbauteil (5) bildet, Schlitze (12) aufweist, welche von den vorhergehenden Metallstreifen (4) durchquert werden.

6. Zahntreibriemen nach Anspruch 1, **dadurch gekennzeichnet, dass** die Querbauteile (4) an die zwei Metallstreifen (4) geschweißt sind.

7. Zahntreibriemen nach Anspruch 2, **dadurch gekennzeichnet, dass** jedes Querbauteil (5) des Metallkerns (2) und folglich jeder Zahn (6) des Zahntreibriemens einen trapezförmigen Querschnitt hat, ebenso in einer Ebene, die orthogonal zur longitudinalen Richtung des Riemens ist, wobei die Endoberfläche (5a) jedes Zahns in zueinander konvergierenden geneigten Ebenen positioniert ist.

8. Zahntreibriemen nach Anspruch 1, **dadurch gekennzeichnet, dass** jede gezahnte Oberfläche des Riemens eine Lage von haftungssicherer Beschichtung (8) über der Gummibeschichtung aufweist.

9. Zahntreibriemen nach irgendeinem der vorhergehenden Ansprüche, **dadurch gekennzeichnet, dass** der Riemen für die Verzahnung mit einem Zahnrad (9) ist, das eine Vielzahl von umfänglichen Zähnen (11) hat, die sich mit Vertiefungen (10) abwechseln und zwei Endflanschen (9a), welche die Enden der Vertiefungen (10) bilden.

10. Zahntreibriemen nach Anspruch 9, **dadurch gekennzeichnet, dass** die Endflansche (9a) des Zahnrades (9) eine umfängliche Verteilung von Fenstern (9b) haben, die mit den Enden der Vertiefungen (10) zwischen den Zähnen (11) des Zahnrades übereinstimmen, um einen Kontakt zwischen den inneren Oberflächen der Flansche (9a) und den Endoberflächen der Zähne (6) des Zahntreibriemens (1) zu verhindern.

11. Verfahren zur Herstellung eines Zahnriemens nach Anspruch 1, **dadurch gekennzeichnet, dass** die zwei parallelen und voneinander beabstandeten Metallstreifen (4) dazu gebracht werden, fortwährend sich voran zu bewegen, indem sie von zwei Zuführspulen abgewickelt werden, wobei die metallischen Querbauteile (5) in Abfolge mit den Metallstreifen (4) verbunden werden, während die Streifen voranschreiten, indem die Querbauteile von einem Querbauteilzuführer zugeführt werden, und der **dadurch** erhaltene Metallkern mit einer Schicht von Elastomer beschichtet wird, während der Metallkern voranschreitet.

## Revendications

1. Courroie de transmission dentée comprenant un noyau métallique (2) recouvert de matériau élastomère, ledit noyau métallique (2) comprenant au moins deux éléments métalliques mutuellement parallèles et espacés (4) disposés dans la direction longitudinale de la courroie, et une pluralité de traverses métalliques qui sont réparties selon un pas constant dans la direction longitudinale de la courroie et qui relient de manière rigide les deux éléments métalliques (4) l'un à l'autre, chaque traverse métallique constituant le noyau d'une dent respective (6) de la courroie dentée (1), chacune desdites traverses métalliques (5) possédant une section transversale dont la forme définit la forme de la section transversale de la dent respective (6), ledit matériau élastomère constituant un revêtement appliqué sur la surface extérieure desdites traverses métalliques (5), **caractérisée en ce que** lesdits éléments métalliques sont des bandes sensiblement coplanaires les unes aux autres.

2. Courroie de transmission dentée selon la revendication 1, **caractérisée en ce que** chaque traverse (5) dudit noyau métallique (2), et donc chaque dent (6) de la courroie de transmission dentée (1), possède une section transversale trapézoïdale.

3. Courroie de transmission dentée selon la revendication 2, **caractérisée en ce que** chaque traverse (5) du noyau métallique (2) est constituée par une barre métallique à section pleine.

4. Courroie de transmission dentée selon la revendication 1, **caractérisée en ce que** chaque traverse (5) est constituée par une barre à section creuse obtenue par une opération de pliage à partir d'une feuille de métal.

5. Courroie de transmission dentée selon la revendication 4, **caractérisée en ce que** la feuille de métal constituant chaque traverse (5) est pourvue de fentes (12) traversées par lesdites bandes métalliques (4).

6. Courroie de transmission dentée selon la revendication 1, **caractérisée en ce que** les traverses (4) sont soudées aux deux bandes métalliques (4).

7. Courroie de transmission dentée selon la revendication 2, **caractérisée en ce que** chaque traverse (5) du noyau métallique (2) et donc chaque dent (6) de la courroie de transmission dentée possède aussi une section transversale trapézoïdale dans un plan orthogonal à la direction longitudinale de la courroie, les surfaces d'extrémité (5a) de chaque dent étant positionnées dans des plans inclinés mutuellement convergents.

8. Courroie de transmission dentée selon la revendication 1, **caractérisée en ce que** la surface dentée de la courroie possède une couche de revêtement anti-adhésif (8) par-dessus le revêtement en caoutchouc.

9. Courroie de transmission dentée selon l'une quelconque des revendications précédentes, **caractérisée en ce que** ladite courroie est destinée à s'engrener avec une roue d'engrenage (9) pourvue d'une pluralité de dents périphériques (11) alternant avec des cavités (10) et de deux flasques d'extrémité (9a) qui constituent les extrémités des cavités (10).

10. Courroie de transmission dentée selon la revendication 9, **caractérisée en ce que** lesdits flasques d'extrémité (9a) de la roue d'engrenage (9) sont pourvus d'une série périphérique de fenêtres (9b) correspondant aux extrémités des cavités (10) situées entre les dents (11) de la roue d'engrenage afin d'empêcher un contact entre les surfaces intérieures desdits flasques (9a) et les surfaces d'extrémité des dents (6) de la courroie de transmission dentée (1).

11. Procédé de fabrication d'une courroie dentée selon la revendication 1, **caractérisé en ce que** les deux bandes métalliques parallèles et espacées (4) sont mises en mouvement continu en étant déroulées à partir de deux bobines d'alimentation, lesdites traverses métalliques (5) sont reliées l'une après l'autre aux bandes métalliques (4) pendant que les bandes avancent, les traverses étant fournies par un distributeur de traverses, et le noyau métallique ainsi obtenu est revêtu d'une couche de matériau élastomère pendant qu'il avance.
